Europäisches Patentamt

European Patent Office

Office européen des brevets

(11) Veröffentlichungsnummer: **0 292 815 B1**

# EUROPÄISCHE PATENTSCHRIFT

(45) Veröffentlichungstag der Patentschrift: **04.03.92**

(51) Int. Cl.⁵: **H01M  10/54**

(21) Anmeldenummer: **88107752.3**

(22) Anmeldetag: **13.05.88**

(54) **Verfahren und Vorrichtung zur Gewinnung angereicherter Fraktionen aus zerkleinerten gebrauchten Akkumulatoren.**

(30) Priorität: **14.05.87 BG 79749/87**

(43) Veröffentlichungstag der Anmeldung:
**30.11.88 Patentblatt  88/48**

(45) Bekanntmachung des Hinweises auf die Patenterteilung:
**04.03.92 Patentblatt  92/10**

(84) Benannte Vertragsstaaten:
**DE FR GR IT**

(56) Entgegenhaltungen:
EP-A- 0 046 654          DD-A- 68 543
GB-A- 2 053 737          GB-A- 2 185 348
US-A- 3 614 003          US-A- 4 026 477

CHEMICAL ABSTRACTS, Band 107, Nr. 10, September 1987, Seite 188, Zusammenfassung Nr. 80973k, Columbus, Ohio, US; & HU-A-40 537 (AKKUMULATOR- ES SZARAZELEM-GYAR) 28-12-1986

(73) Patentinhaber: **NAUCHNO-ISSLEDOVATELSKI SEKTOR-VCHTI**
**Boul.Kl.Ohridski No. 8**
**Sofia(BG)**

(72) Erfinder: **Lyakov, Nedyalko Komnev**
**1756 Sofia**
**Boul.Kl.Ohridski 7a(BG)**
Erfinder: **Haralampiev, Georgi Alexandrov**
**1592 Sofia**
**Komplex Druzba Block 35(BG)**
Erfinder: **Nikolov, Todor Georgiev**
**L.Karavelov Str. Nr. 88**
**Sofia(BG)**
Erfinder: **Buyukliev, Georgi Stoykov**
**Trakia Str. 23**
**6600 Kardjali(BG)**
Erfinder: **Petrov, Peter Stoilov**
**Trakia Str. 23**
**6600 Kardjali(BG)**
Erfinder: **Valchev, Peter Valchev**
**G. Dimitrov Street 3**
**6600 Kardjali(BG)**
Erfinder: **Myuftiev, Valcho Petkov**
**Antim I Street 2**
**6600 Kardjali(BG)**
Erfinder: **Primov, Kalin Todorov**
**V.Aprilov-Street 8**
**6600 Kardjali(BG)**

Rank Xerox (UK) Business Services

(74) Vertreter: **Finck, Dieter et al**
**Patentanwälte v. Füner, Ebbinghaus, Finck**
**Mariahilfplatz 2 & 3**
**W-8000 München 90(DE)**

# Beschreibung

Die Erfindung betrifft ein Verfahren zur Gewinnung von angereicherten Fraktionen aus zerkleinerten gebrauchten Akkumulatoren, bei welchem das zerkleinerte Material separiert und gewaschen wird, sowie eine Vorrichtung zur Durchführung dieses Verfahrens, bei welcher Trenn-Wascheinrichtungen aufeinanderfolgend angeordnet sind.

Aus der US-A-40 26 477 ist es bekannt, gebrauchte Akkumulatoren bis zu einer Stückgröße von 120 mm zu zerkleinern und das zerkleinerte Material anschließend zu trocknen und zu sieben, wobei eine Paste in Form einer Oxid-Sulfatfraktion abgetrennt wird, und die Stücke, deren Größe über 120 mm liegt, wieder für ihre Nachzerkleinerung zurückgeführt werden. Das gesiebte Material wird durch eine Suspension aus Wasser und der pastösen Oxid-Sulfatfraktion einer Separation unterworfen, wobei sich eine schwere Metallfraktion und eine leichte organische Fraktion abscheiden. Nach der Separation erfolgt ein gesondertes Waschen beider Fraktionen, wobei die organische Fraktion einer wiederholten Separation unterworfen wird.

Ein Teil der ausgeschiedenen Oxid-Sulfatfraktion wird zur Regenerierung der Suspension verwendet, während die Restmenge ebenso wie die schwere Metallfraktion metallurgisch verarbeitet werden.

Die Vorrichtung zur Durchführung des bekannten Verfahrens umfaßt mindestens zwei aufeinanderfolgende Separatoren in Trommelbauweise, denen jeweils eine Einrichtung zum Brechen der gebrauchten Akkumulatoren auf Stückgröße für die Trocknung und das Sieben des zerkleinerten Materials, für die Sedimentation der Suspension sowie für die Zirkulation der Suspension, zum Waschen der abgetrennten Fraktionen und für ihre Lagerung zugeordnet sind.

Wegen der vorläufigen Beseitigung der Grundmenge an Oxid-Sulfatfraktion nach der Zerkleinerung der gebrauchten Akkumulatoren wird deren Chlorgehalt erhöht, was technischen Aufwand erfordert. Außerdem dürfen die Größen der stückförmigen zerkleinerten Abfälle nicht mehr als 120 mm betragen, wobei der Zerkleinerungsgrad der Metallfraktion und der organischen Fraktion einschließlich des Polyvinylchlorids erhöht wird. Es fehlt jedoch eine selbständige Trennung der vorhandenen Fraktionen des leichten Materials, nämlich des Ebonits und des Polyvinylchlorids, wodurch ihre sekundäre differenzierte Verwertung nicht möglich ist. Ferner sind zusätzliche Einrichtungen zum Regenerieren und für die Zirkulation der Suspension erforderlich, was weiteren Aufwand bedeutet.

Der Erfindung liegt die Aufgabe zugrunde, das Verfahren und die Vorrichtung der gattungsgemäßen Art so auszubilden, daß aus einer schweren Suspension auf der Basis von Wasser und Oxid-Sulfatfraktion und grob zerkleinerten gebrauchten Akkumulatoren ohne Regenerierung und Zirkulation der Suspension außerhalb der Vorrichtung in einem einfachen technologischen Prozeß mit Hilfe einer einfach und kompakt gebauten Vorrichtung die Fraktionen für sich mit hoher Qualität gewonnen werden können.

Diese Aufgabe wird erfindungsgemäß dadurch gelöst, daß aus dem auf eine Stückgröße von bis 300 mm zerkleinerten Material mit Wasser und pastöser Oxid-Sulfatfraktion eine Schwersuspension mit dem spezifischen Gewicht von 1,65 bis 2,20 $kg/dm^3$ gebildet wird, aus der ein schweres Material, bestehend aus einer grobkörnigen Metallfraktion und einer Oxid-Sulfatfraktion, sowie ein leichtes Material in Form einer organischen Fraktion, bestehend aus Ebonit, Polyvinylchlorid und Polypropylen, verunreinigt durch die Oxyd-Sulfatfraktion separiert wird, daß zusammen mit dem schweren Material auch eine gewisse Menge an Suspension abgeführt wird, während der Rest zum Separieren verbleibt, daß danach das schwere Material zur Gewinnung einer reinen grobkörnigen Metallfraktion und einer mit Oxid-Sulfatfraktion verunreinigten feinkörnigen Metallfraktion gewaschen wird, wobei die letztere abgetrennt und zu einer reinen feinkörnigen Metallfraktion und Oxidsulfatfraktion klassiert wird, daß aus dem noch ungewaschenen leichten Material zur zweiten Separation eine Suspension aus Wasser und Oxid-Sulfatfraktion mit einem spezifischen Gewicht der Suspension von 1,25 bis 1,65 $kg/dm^3$ gebildet und separiert wird, wodurch ein zweites schweres Material, bestehend aus einer Ebonitfraktion, und ein zweites leichtes Material, das eine Polyvinylchloridfraktion und eine Polypropylenfraktion verunreinigt durch Oxid-Sulfatfraktionen ist, gewonnen wird, daß dann das gewonnene zweite schwere Material und das gewonnene zweite leichte Material vereinzelt gewaschen und separiert werden, was eine reine Ebonitfraktion, Polyvinylchlorid- und Polypropylenfraktion sowie Oxid-Sulfatfraktion ergibt, daß das zweite leichte Material einer dritten Separierung in Wasser unterworfen wird, wodurch sich ein drittes schweres Material in Form einer Polyvinylchloridfraktion und ein drittes leichtes Material in Form einer Polypropylenfraktion ergeben, und daß dann schließlich die Fraktionen gewaschen werden, um reines Polyvinylchlorid und reines Polypropylen zu erhalten.

Mit dem erfindungsgemäßen Verfahren lassen sich die Stücke der gebrauchten Akkumulatoren mit einem hohen Grad an Selektivität in die Ausgangsprodukte trennen. Die Endprodukte werden im reinen Zustand erhalten, so daß sie eine hohe Qualität haben und sekundär differenziert verwertet werden können. Eine Regenerierung und Rezirkulation der Suspension ist nicht erforderlich, da sie sich fortlaufend erneuert und ihr spezifisches Gewicht stabil gehalten wird. Die Stückgröße des zerkleinerten Materials kann in einem weiten Bereich schwanken, da nur ein Aufreißen der Verbindung zwischen den Elementen der Akkumulatorenbatterien erforderlich ist.

Die zur Durchführung des erfindungsgemäßen Verfahrens verwendete Vorrichtung umfaßt drei aufeinanderfolgend angeordnete Trenn-Wasch-Einrichtungen. Die Vorrichtung zeichnet sich dadurch aus, daß Jede Trenn-Wasch-Einrichtung aus zwei konzentrisch angeordneten Trommeln, nämlich einer Außentrommel und einer Innentrommel, gebildet wird, wobei die Außentrommel ein zylindrisches Teil mit einem an seiner Innenwand angeordneten schraubenförmigen Band, einem an seinem bezogen auf die Materiallaufrichtung vorderen Abschnitt angebrachten Deckel mit Einlaßöffnung und einem an seinem bezogen auf die Materiallaufrichtung hinteren Abschnitt vorgesehenen sich konisch verjüngenden Teil ist, auf dessen Innenwand ein schraubenförmiges Band angebracht ist und in einem sich konisch erweiternden Kegel mit einer ringförmigen Öffnung endet, daß zwischen dem zylindrischen Teil und dem sich konisch verjüngenden Teil eine perforierte Trennwand mit einer Zwischenöffnung vorgesehen ist, die im Bereich der Bänder des hinteren Abschnitts der Außentrommel und des vorderen Abschnitts des sich konisch verjüngenden Teils liegt, wobei an der Außenwand des zylindrischen Teils eine Stützbandage und an einem vorderen Abschnitt der Innenwand angrenzend an den Deckel Rührschaufeln angebracht sind, daß die konzentrisch zur Achse der Außentrommel mittels Rippen befestigte perforierte Innentrommel ein zylindrisches Teil aufweist, an dessen Innenwand ein schraubenförmiges Band und an dessen Außenwand perforierte schöpfende Schaufeln mit Längsöffnungen in deren zylindrischen Teil angebracht sind, daß die perforierte Innentrommel am vorderen Ende durch einen Boden geschlossen und an ihrem hinteren Ende zu einer Ausgangsöffnung führt, daß über den Längsöffnungen Reflektoren angebracht sind, daß über der Zwischenöffnung ein Schild zum Abhalten von leichtem Material vorgesehen ist, daß auf dem sich konisch erweiternden Kegel ein kleiner perforierter Zylinder festgelegt ist, der von einem Mantel mit einer Öffnung umschlossen ist und an seinem unteren Teil in einer Ebene senkrecht zur Achse des kleinen perforierten Zylinders eine geneigte Schnecke trägt, daß die perforierte Innentrommel an ihrem in Materiallaufrichtung hinteren Ende über einen kegelförmigen perforierten Durchgang mit einem Rohr verbunden ist, in dem ein schraubenförmiges Band angeordnet ist, das die Ausgangsöffnung hat, daß konzentrisch zum Rohr, das in dem Bereich nach dem kleinen perforierten Zylinder perforiert ist, ein großer perforierter Zylinder um das Rohr angeordnet ist, der von einem Mantel umschlossen ist, der an seinem vorderen Abschnitt eine Öffnung und im Bereich um den großen perforierten Zylinder eine weitere untere Öffnung aufweist, und daß dem kleinen und dem großen perforierten Zylinder Sprühköpfe zugeordnet sind.

Zweckmäßigerweise ist das schraubenförmige Band der Außentrommel zweigängig mit einem Winkelabstand von 180°.

Vorteilhafterveise sind dem kleinen perforierten Zylinder mindestens zwei Sprühköpfe seitlich in der horizontalen Achsebene des Zylinders und darunter in einem Winkelabstand von 30 bis 80° zugeordnet.

Vorzugsweise sind dem großen Zylinder mindestens zwei Sprühköpfe zugeordnet, die seitlich zu dem Zylinder mit einem Winkel von 100 bis 180° zueinander angeordnet sind.

Dabei können mindestens ein großer perforierter Zylinder und ein kleiner perforierter Zylinder aufeinanderfolgend angeordnet sein.

Es ist vorteilhaft, wenn die Öffnungen der Trennwand und des konischen perforierten Durchgangs parallelepipedförmig ausgebildet und schachbrettartig angeordnet sind.

Es ist ferner zweckmäßig, wenn die Öffnungen der Perforation des zylindrischen Teils der Innentrommel, des kleinen perforierten Zylinders, des großen perforierten Zylinders und des perforierten Teils des Rohres rund mit schachbrettartiger Positionierung sind, wobei die Fläche der Öffnungen von zwei Nachbarreihen, deren Zentren gleichseitige Dreiecke bilden, fünfmal bis siebenmal kleiner ist als die Fläche des entsprechenden Dreiecks.

Die erfindungsgemäße Vorrichtung ist kompakt gebaut und erlaubt die Gewinnung von Endprodukten hoher Qualität. Zusätzliche Anlagen zum Regenerieren und Zirkulieren der Suspension und zum Waschen der Fraktionen entfallen. Das spezifische Gewicht der Suspension läßt sich auf einfache Weise aufrechterhalten. Die Vorrichtung kann außerdem leicht gewartet und vollautomatisch betrieben werden. Aufgrund der gewählten Bauweise tritt eine Verunreinigung der Umwelt nicht ein.

Anhand von Zeichnungen wird ein Ausführungsbeispiel der Erfindung näher erläutert. Es zeigt.:

Fig. 1 im Längsschnitt eine Trenn- und Wascheinrichtung der Vorrichtung,

Fig. 2 den Schnitt A-A von Fig. 1,

Fig. 3 schematisch im Längsschnitt eine zu der Vorrichtung gehörende Einheit zum Waschen und Klassieren der schweren Fraktion,

Fig. 4 die Einheit von Fig. 3 im Querschnitt,

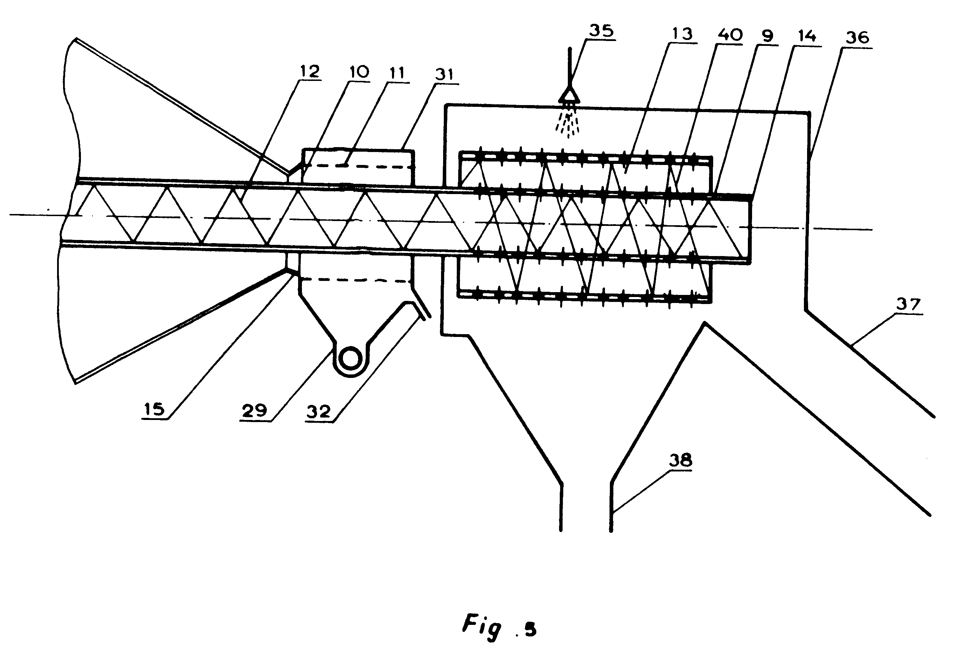

Fig. 5 schematisch im Längsschnitt eine zur Vorrichtung gehörende Einheit zum Waschen und Sieben der leichten Fraktion,

Fig. 6 die Einheit von Fig. 5 im Querschnitt und Fig. 7 schematisch die Vorrichtung zur Gewinnung von fünf angereicherten Fraktionen aus grob zerkleinerten gebrauchten Akkumulatoren.

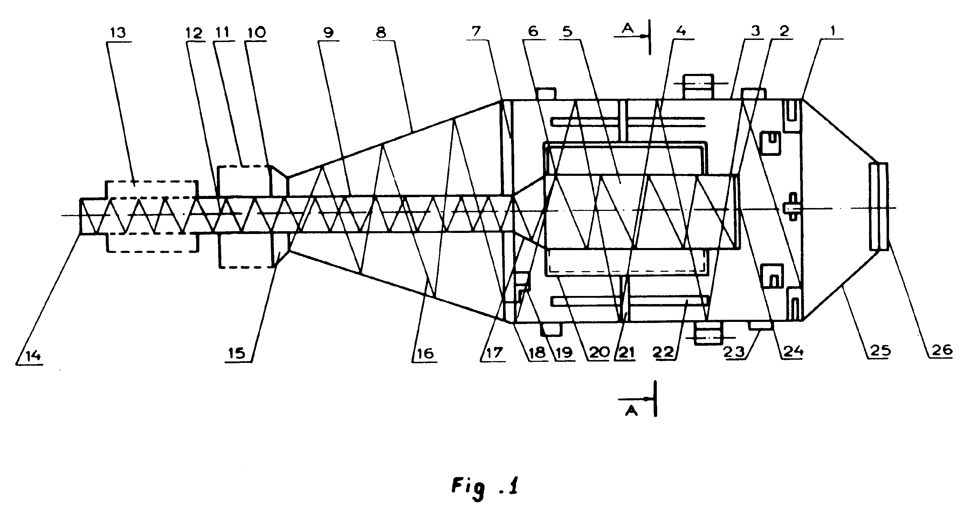

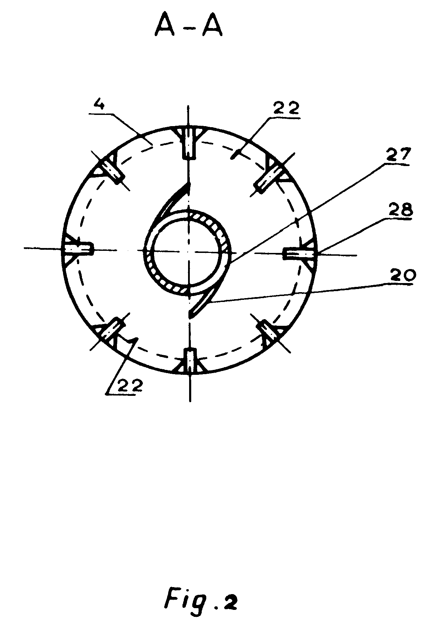

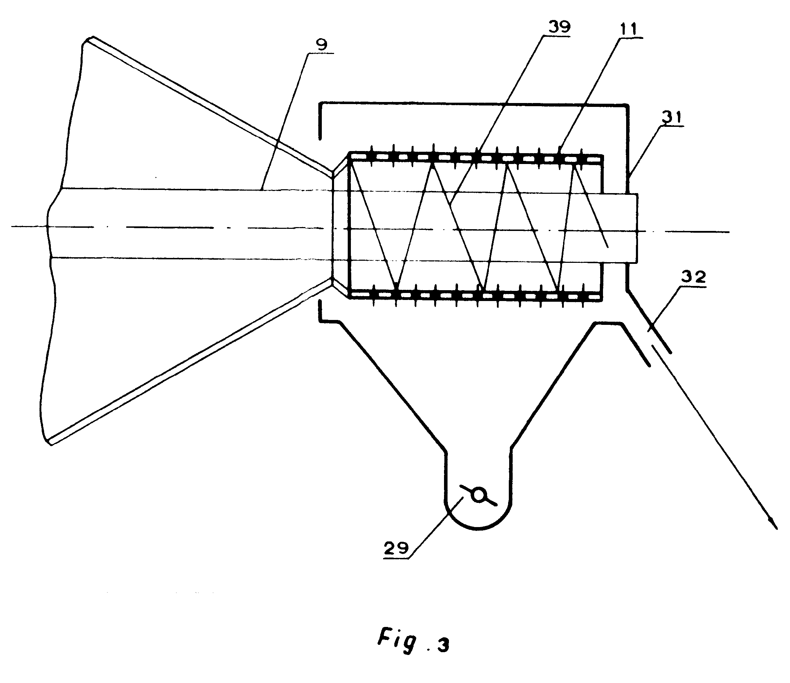

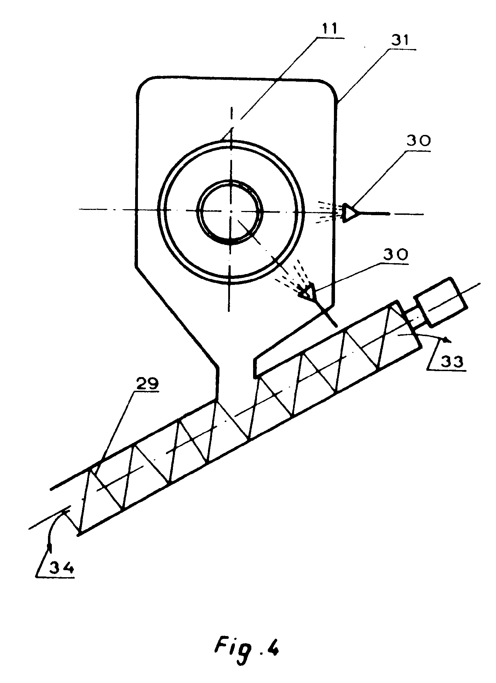

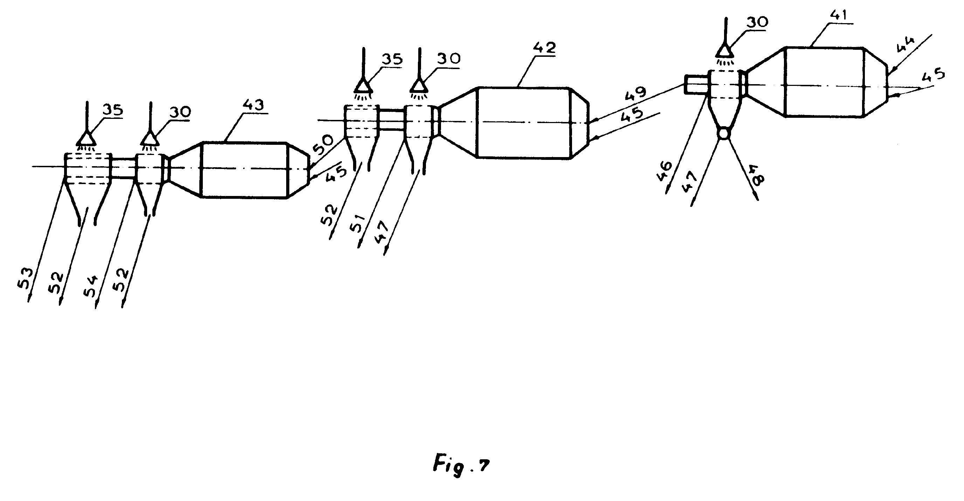

Die in Fig. 7 gezeigte Vorrichtung, die zur Gewinnung von fünf angereicherten Fraktionen aus grob zerkleinerten gebrauchten Akkumulatoren dient, nämlich zur Gewinnung einer Metallfraktion, die grobkörnig und feinkörnig ist, einer Oxid-Sulfatfraktion, einer Ebonitfraktion, einer Polyvinylchloridfraktion und einer Polypropylenfraktion, weist drei aufeinanderfolgend angeordnete Trenn-Wascheinrichtungen 41, 42 und 43 auf, von denen jede, wie in Fig. 1 und 2 gezeigt ist, aus zwei konzentrisch angeordneten Trommeln, nämlich einer Außentrommel 1 und einer Innentrommel 2, besteht. Die Außentrommel 1 ist ein zylindrisches Teil 3, längs dessen Innenwand sich ein eingängiges schraubenförmiges Band 4 erstreckt. An dem, bezogen auf die Materiallaufrichtung, vorderen Abschnitt des zylindrischen Teils 3 ist ein Deckel 25 mit einer Einlaßöffnung 26 angebracht. An seinem hinteren Abschnitt weist es ein sich konisch verjüngendes Teil 8 auf, an dessen Innenwand ein zweigängiges schraubenförmiges Band 16 befestigt ist. An den sich konisch verjüngenden Teil 8 schließt sich ein sich erweiternder, in einer ringförmigen Öffnung 10 endender Kegel 15 an. Die Öffnung 10 bildet den Übergang in einen kleinen perforierten Zylinder 11 mit einem schraubenförmigen Band 39 (Fig. 3), an den seitlich auf der Höhe seiner Achse und darunter ein im Winkel von 45˚ zueinander jeweils ein Sprühkopf 30 (Fig. 4) angeordnet ist. Der perforierte Zylinder 11 ist von einem Mantel 31 umschlossen, der eine Öffnung 32 (Fig. 3) für die gewaschene grobkörnige Metallfraktion trägt und in seinem Unterteil in einer Ebene senkrecht zu seiner Achse eine geneigte Schnecke 29 mit einer Öffnung 33 für die feinkörnige Metallfraktion und einer Öffnung 34 für die Oxid-Sulfatfraktion aufweist (Fig. 4).

Zwischen dem zylindrischen Teil 3 und dem kegelförmigen Teil 8 ist eine perforierte Trennwand 7 mit einer Zwischenöffnung 18 vorgesehen, die in der Zone der schraubenförmigen Bänder 4 und 16 liegt, über welchen ein Schild 19 angebracht ist (Fig. 1). Der zylindrische Teil 3 hat an seiner Außenwand eine Stützbandage 23 und an seinem vorderen Abschnitt an der Innenwand angrenzend an den Deckel 25 Rührschaufeln 28 (Fig. 2).

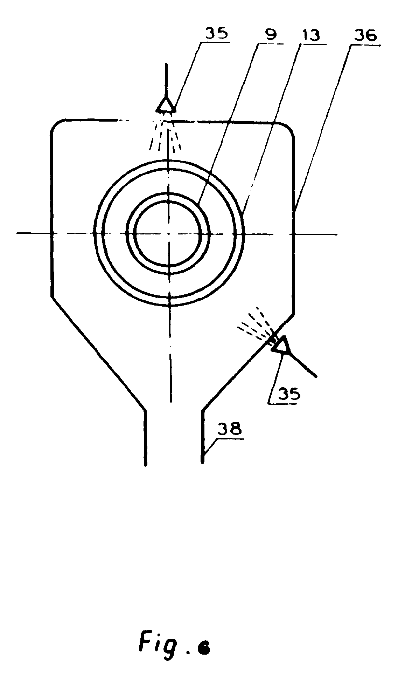

Die konzentrisch zu der Achse der Außentrommel 1 umbeweglich mittels Rippen 21 festgelegte perforierte Innentrommel 2 hat ein zylindrisches Teil 5, an dessen Innenwand ein eingängiges schraubenförmiges Band 6 und dessen Außenwand perforierte Schaufeln 20 angebracht sind, in deren Basis am zylindrischen Teil 5 Längsöffnungen 27 ausgebildet sind, während darüber in der Zone des eingängigen schraubenförmigen Bandes 4 Reflektoren 22 befestigt sind. Die perforierte Innentrommel 2 ist an ihrem Vorderteil durch einen Boden 24 geschlossen und hat an ihrem hinteren Ende einen kegelartigen perforierten Durchgang 17, und dem ein Rohr 9 mit einer Ausgangsöffnung 14 angebracht ist. Längs der Innenwand des Rohres 9 ist ein schraubenförmiges Band 12 angebracht. Das Rohr 9 ist in der Zone in Materiallaufrichtung nach dem kleinen perforierten Zylinder 11 perforiert. Konzentrisch zu dem Rohr 9 ist ein großer perforierter Zylinder 13 mit einem schraubenförmigen Band 40 angeordnet. Seitlich vom Zylinder 13 sind zwei Sprühköpfe 35 unter einem Winkel von 120˚ zueinander positioniert (Fig. 6). Der perforierte Zylinder 13 ist von einem Mantel 36 umschlossen. Er hat in seinem hinteren Teil eine Öffnung 37 für die gewaschene und gesiebte organische Fraktion und eine untere Öffnung 38 für die Oxid-Sulfatfraktion. Der Öffnungen in der perforierten Trennwand 7 und in dem kegelartigen perforierten Durchgang 17 sind parallelepipedförmig und sind schachbrettartig vorgesehen, während am zylindrischen Teil 5 der Innentrommel 2 des kleinen perforierten Zylinders 11, des großen perforierten Zylinders 13 und des perforierten Teils des Rohres 9 konzentrisch dazu die Öffnungen rund und schachbrettartig positioniert sind, wobei die Fläche von zwei Nachbarreihen, deren Zentren gleichseitige Dreiecke bilden, fünfmal bis siebenmall kleiner als die Fläche des entsprechenden Dreiecks ist.

Die in Fig. 7 gezeigte Vorrichtung wird wie folgt betrieben: Die Trenn-Wasch-Einrichtungen 41 und 42 sind im voraus mit Wasser und Oxid-Sulfatfraktion beschickt. In die Trenn-Wasch-Einrichtung 43 ist nur Wasser eingebracht. Alle drei Trenn-Wasch-Einrichtungen 41, 42 und 43 werden mit Hilfe eines Antriebs in Drehung versetzt. In der Trenn-Wasch-Einrichtung 41 werden durch die Einlaßöffnung 26 zerkleinerte Akkumulatorabfälle 44 mit einer Stückgröße von bis zu 300 mm eingebracht, sowie Wasser 45 in einer Menge zugeführt, die zum Aufrechterhalten eines konstanten spezifischen Gewichtes der Suspension von 1,65 bis 2,20 kg/dm³ erforderlich ist. Das Umrühren des Materials erfolgt durch die Rührschaufeln 28, wobei die organische Fraktion, d. h. das leichte Material, an der Oberfläche aufschwimmt, während die Metallfraktion, d. h. das schwere Material, an der Innenwand der Außentrommel 1 bleibt. Die Metallfraktion wird mittels des eingängigen schraubenförmigen Bandes 4 zur Trennwand 7 (Fig. 1) geschoben und gelangt durch die Zwischenöffnung 18, über der das Schild 19 zum Abhalten von zufällig ankommendem leichten Material angeordnet ist, in den konischen Teil 8, wo sie mit Hilfe des zweigängigen schraubenförmigen Bandes 16 bis zur ringförmigen Öffnung 10 transportiert wird. Von da aus gelangt die Fraktion in den perforierten Zylinder 11, wo gewaschen wird, und aus dem sie dann als angereicherte Metallfraktion 46 durch die Öffnung 32 austritt. Die in dem perforierten Zylinder 11 separierte Oxyd-Sulfatfraktion 47 gelangt auf die geneigte Schnecke 29, wo eine feinkörnige Metallfraktion 48 separiert wird, die als angereicherte Fraktion in ein Sedimentationsbecken geführt wird.

Das leichte Material, also die organische Fraktion 49, wird von den Schaufeln 20 abgeschöpft und gelangt mit Hilfe der Reflektoren 22 durch die Längsöffnung 27 in der Innentrommel 2. Von dort wird diese Fraktion mit Hilfe der eingängigen schraubenförmigen Bänder 8 und 12 weitertransportiert und kommt in den perforierten Zylinder 13, wo gewaschen und doppelt gesiebt wird. Die so angereicherte Fraktion wird durch die Öffnung 37 abgeführt. Die separierte angereicherte Oxid-Sulfatfraktion fließt aus der Öffnung 38 in ein Sedimentationsbecken.

Um die organische Fraktion 49 in ihre Bestandteile zu trennen, tritt sie noch ungewaschen in die zweite Trenn-Wasch-Einrichtung 42 ein, wo Wasser 45 mit der zur Aufrechterhaltung eines spezifischen Gewichtes der Suspension von 1,25 bis 1,65 kg/dm$^3$ notwendigen Menge zugeführt wird. Das Gemisch einer Polypropylen- und Polyvinylchloridfraktion 50 schwimmt an der Oberfläche auf, an der Innenwand der Außentrommel 1 verbleibt eine Ebonitfraktion 51.

Es können auch beide Fraktionen nach dem Waschen und Absieben des leichten Materials als angereicherte Fraktionen abgeführt werden.

Die erhaltene Oxid-Sulfatfraktion 47, deren Menge minimal ist, fließt gemeinsam mit dem Waschwasser 52 ab in ein Sedimentationsbecken. Das Gemisch aus der Polypropylen-und der Polyvinylchloridfraktion 50 wird in die dritte Trenn-Wasch-Einrichtung 43 eingeführt, in der nur Wasser 45 vorhanden ist. Die Polypropylenfraktion 53 schwimmt an der Oberfläche auf, während die Polyvinylchloridfraktion 54 an der Innenwand der Außentrommel 1 verbleibt. Beide Fraktionen werden nach dem Abwaschen,wie vorher beschrieben, abgeführt.

Das zur Durchführung des Prozesses verwendete Wasser ist Umlaufwasser, wobei nur soviel ergänzt wird, wie zum Kompensieren der Feuchtigkeit der Endprodukte, also der angereicherten Fraktionen, erforderlich ist.

Zur Abtrennung des Propylens von der organischen Fraktion 49 wird diese nach ihrer Separierung in der Trenn-Wasch-Einrichtung 41 in die Trenn-Wasch-Einrichtung 43 geführt, wo nur Wasser 45 vorhanden ist. Die Polypropylenfraktion 53 schwimmt an der Oberfläche auf, während das Gemisch aus der Ebonitfraktion 47 und der Polyvinylchloridfraktion 54 an der Innenwand der Außentrommel 1 verbleibt. Beide Fraktionen werden nach dem Waschen und Sieben des leichten Materials wie beschrieben abgeführt.

**Patentansprüche**

1. Verfahren zur Gewinnung von angereicherten Fraktionen aus zerkleinerten gebrauchten Akkumulatoren, bei welchem das zerkleinerte Material separiert und gewaschen wird, dadurch **gekennzeichnet**

   - daß aus dem auf eine Stückgröße von bis 300 mm zerkleinerten Material (44) mit Wasser (45) und pastöser Oxid-Sulfatfraktion eine Schwersuspension mit dem spezifischen Gewicht von 1,65 bis 2,20 kg/dm$^3$ gebildet wird, aus der ein schweres Material (46), bestehend aus einer grobkörnigen Metallfraktion und einer Oxid-Sulfatfraktion, sowie ein leichtes Material (49) in Form einer organischen Fraktion, bestehend aus Ebonit, Polyvinylchlorid und Polypropylen, verunreinigt durch die Oxyd-Sulfatfraktion separiert wird,
   - daß zusammen mit dem schweren Material (46) auch eine gewisse Menge an Suspension abgeführt wird, während der Rest zum Separieren verbleibt,
   - daß danach das schwere Material (46) zur Gewinnung einer reinen grobkörnigen Metallfraktion und einer mit Oxid-Sulfatfraktion verunreinigten feinkörnigen Metallfraktion (48) gewaschen wird, wobei die letztere abgetrennt und zu einer reinen feinkörnigen Metallfraktion (48) und Oxidsulfatfraktion (47) klassiert wird,
   - daß aus dem noch ungewaschenen leichten Material (49) zur zweiten Separation eine Suspension aus Wasser (45) und Oxid-Sulfatfraktion mit einem spezifischen Gewicht der Suspension von 1,25 bis 1,65 kg/dm$^3$ gebildet und separiert wird, wodurch ein zweites schweres Material (51), bestehend aus einer Ebonitfraktion, und ein zweites leichtes Material, das eine Polyvinylchloridfraktion und eine Polypropylenfraktion verunreinigt durch Oxid-Sulfatfraktionen ist, gewonnen wird,
   - daß dann das gewonnene zweite schwere Material (51) und das gewonnene zweite leichte Material (52) vereinzelt gewaschen und separiert werden, was eine reine Ebonitfraktion, Polyvinylchlorid- und Polypropylenfraktion sowie Oxid-Sulfatfraktion ergibt,
   - daß das zweite leichte Material (52) einer dritten Separierung in Wasser unterworfen wird, wodurch sich ein drittes schweres Material in Form einer Polyvinylchloridfraktion und ein drittes leichtes Material in Form einer Polypropylenfraktion ergeben, und

- daß dann schließlich die Fraktionen gewaschen werden, um reines Polyvinylchlorid und reines Polypropylen zu erhalten.

2. Vorrichtung zur Durchführung des Verfahrens nach Anspruch 1, bei welcher Trenn-Wasch-Einrichtungen aufeinanderfolgend angeordnet sind, dadurch **gekennzeichnet,**

- daß jede Trenn-Wasch-Einrichtung (41, 42, 43) aus zwei konzentrisch angeordneten Trommeln, nämlich einer Außentrommel (1) und einer Innentrommel (2), gebildet wird, wobei die Außentrommel (1) ein zylindrisches Teil (3) mit einem an seiner Innenwand angeordneten schraubenförmigen Band (4), einem an seinem bezogen auf die Materiallaufrichtung vorderen Abschnitt angebrachten Deckel (25) mit Einlaßöffnung (26) und einem an seinem bezogen auf die Materiallaufrichtung hinteren Abschnitt vorgesehenen sich konisch verjüngenden Teil (8) ist, auf dessen Innenwand ein schraubenförmiges Band (16) angebracht ist und in einem sich konisch erweiternden Kegel (15) mit einer ringförmigen Öffnung (10) endet,

- daß zwischen dem zylindrischen Teil (3) und dem sich konisch verjüngenden Teil (8) eine perforierte Trennwand (7) mit einer Zwischenöffnung (18) vorgesehen ist, die im Bereich der Bänder (4 bzw. 16) des hinteren Abschnitts der Außentrommel (1) und des vorderen Abschnitts des sich konisch verjüngenden Teils (8) liegt, wobei an der Außenwand des zylindrischen Teils (3) eine Stützbandage (23) und an einem vorderen Abschnitt der Innenwand angrenzend an den Deckel (25) Rührschaufeln (28) angebracht sind,

- daß die konzentrisch zur Achse der Außentrommel (1) mittels Rippen (21) befestigte perforierte Innentrommel (2) ein zylindrisches Teil (5) aufweist, an dessen Innenwand ein schraubenförmiges Band (6) und an dessen Außenwand perforierte schöpfende Schaufeln (20) mit Längsöffnungen (27) in deren zylindrischem Teil (5) angebracht sind,

- daß die perforierte Innentrommel (2) am vorderen Ende durch einen Boden (24) geschlossen und an ihrem hinteren Ende zu einer Ausgangsöffnung (14) führt,

- daß über den Längsöffnungen (27) Reflektoren (22) angebracht sind,

- daß über der Zwischenöffnung (18) ein Schild (19) zum Abhalten von leichtem Material vorgesehen ist,

- daß auf dem sich konisch erweiternden Kegel (15) ein kleiner perforierter Zylinder (11) festgelegt ist, der von einem Mantel (31) mit einer Öffnung (32) umschlossen ist und an seinem unteren Teil in einer Ebene senkrecht zur Achse des kleinen perforierten Zylinders (11) eine geneigte Schnecke (29) trägt,

- daß die perforierte Innentrommel (2) an ihrem in Materiallaufrichtung hinteren Ende über einen kegelförmigen perforierten Durchgang (17) mit einem Rohr (9) verbunden ist, in dem ein schraubenförmiges Band (12) angeordnet ist, das die Ausgangsöffnung (14) hat,

- daß konzentrisch zum Rohr (9), das in dem Bereich nach dem kleinen perforierten Zylinder (11) perforiert ist, ein großer perforierter Zylinder (13) um das Rohr (9) angeordnet ist, der von einem Mantel (36) umschlossen ist, der an seinem vorderen Abschnitt eine Öffnung (37) und im Bereich um den großen perforierten Zylinder eine weitere untere Öffnung (38) aufweist, und

- daß dem kleinen und dem großen perforierten Zylinder (11 bzw. 13) Sprühköpfe (30 bzw. 35) zugeordnet sind.

3. Vorrichtung nach Anspruch 2, dadurch **gekennzeichnet,** daß das schraubenförmige Band (4) der Außentrommel (1) zweigängig mit einem Winkelabstand von 180° ist.

4. Vorrichtung nach Anspruch 2 oder 3, dadurch **gekennzeichnet,** daß dem kleinen perforierten Zylinder (11) mindestens zwei Sprühköpfe (30) seitlich in der horizontalen Achsebene des Zylinders (11) und darunter in einem Winkelabstand von 30 bis 80° zugeordnet sind.

5. Vorrichtung nach einem der Ansprüche 2 bis 4, dadurch **gekennzeichnet,** daß dem großen Zylinder (13) mindestens zwei Sprühköpfe (35) zugeordnet sind, die seitlich zu dem Zylinder (13) mit einem Winkel von 100 bis 180° zueinander angeordnet sind.

6. Vorrichtung nach einem der Ansprüche 2 bis 5, dadurch **gekennzeichnet,** daß mindestens ein großer perforierter Zylinder (13) und ein kleiner perforierter Zylinder (11) aufeinanderfolgend angeordnet sind.

7. Vorrichtung nach einem der Ansprüche 2 bis 6, dadurch **gekennzeichnet,** daß die Öffnungen der Trennwand (7) und des konischen perforrierten Durchgangs (17) parallelepipedförmig ausgebildet und schachbrettartig angeordnet sind.

8. Vorrichtung nach einem der Ansprüche 2 bis 7, dadurch **gekennzeichnet,** daß die Öffnungen der Perforation des zylindrischen Teils (5) der Innentrommel (2), des kleinen perforierten Zylinders (11), des großen perforierten Zylinders (13) und des perforierten Teils des Rohre (9) rund mit schachbrettartiger Positionierung sind, wobei die Fläche der Öffnungen von zwei Nachbarreihen, deren Zentren gleichseitige Dreiecke bilden, fünfmal bis siebenmal kleiner ist als die Fläche des entsprechenden Dreieck.

## Claims

1. Process for the recovery of enriched fractions of comminuted used accumulators, in which the comminuted material is separated and washed, characterised in that

   - from the material (44) comminuted to a fragment size of up to 300 mm a heavy suspension with the specific weight of 1.65 to 2.20 kg/dm$^3$ is formed with water (45) and pasty oxide sulphate fraction, from which a heavy material (46), comprising a large-grained metal fraction and an oxide sulphate fraction, and a light material (49) in the form of an organic fraction, comprising ebonite, polyvinylchloride and polypropylene, contaminated by the oxide sulphate fraction is separated,
   - in that together with the heavy material (46) a specific amount of suspension is also abstracted whilst the rest remains to be separated,
   - in that the heavy material (46) is then washed to recover a pure coarse-grained metal fraction and a fine-grained metal fraction (48) contaminated with oxide sulphate fraction, the metal fraction being separated and graded into a pure fine-grained metal fraction (48) and oxide sulphate fraction (47),
   - in that from the still unwashed light material (49) for the second separation a suspension of water (45) and oxide sulphate fraction with a specific weight of the suspension of 1.25 to 1.65 kg/dm$^3$ is formed and separated, and hence a second heavy material (51), comprising an ebonite fraction, and a second light material which is a polyvinylchloride fraction and a polypropylene fraction contaminated by oxide-sulphate fractions, is recovered,
   - in that the recovered second heavy material (51) and the recovered second light material (52) are then individually washed and separated, which results in a pure ebonite fraction, polyvinylchloride- and polypropylene fraction as well as oxide sulphate fraction,
   - in that the second light material (52) is subjected to a third separation in water and hence a third heavy material in the form of a polyvinylchloride fraction and a third light material in the form of a polypropylene fraction are produced, and
   - in that finally the fractions are then washed so as to obtain pure polyvinylchloride and pure polypropylene.

2. Device for carrying out the process according to claim 1, in which separating-washing devices are arranged one after the other, characerised in that

   - each separating-washing device (41, 42, 43) is formed from two concentrically arranged drums, namely an outer drum (1) and an inner drum (2), the outer drum (1) being a cylindrical portion (3) with a screw-shaped strip (4) arranged on its inner wall, a cover (25) fitted on its forward section with respect to the direction of travel of the material, having an inlet aperture (26), and a conically tapering portion (8) provided on its rear section with respect to the direction of travel of the material, on the inner wall of which tapering portion there is fitted a screw-shaped strip (16), and ending in a conically widening cone (15) having an annular aperture (10),
   - in that between the cylindrical portion (3) and the conically tapering portion (8) there is provided a perforated dividing wall (7) with an intermediate aperture (18), which is in the region of the strips (4 and 16) of the rear section of the outer drum (1) and the front section of the conically tapering portion (8), a support band (23) being fitted on the outer wall of the cylindrical portion (3), and agitator blades (28) fitted on a front section of the inner wall adjacent to the cover (25),

- in that the perforated inner drum (2) secured concentrically to the axis of the outer drum (1) by means of ribs (21) has a cylindrical portion (5) on whose inner wall a screw-shaped strip (6) is fitted and on whose outer wall perforated scooping blades (20), with longitudinal apertures (27), are fitted [in its cylindrical portion (5)],

- in that the perforated inner drum (2) is closed at the front end by a base (24) and at its rear end leads to an outlet aperture (14),

- in that reflectors (22) are fitted over the longitudinal apertures (27),

- in that a shield (19) is provided over the intermediate aperture (18) for restraining light material,

- in that a small perforated cylinder (11) is fixed on the conically widening cone (15), is enclosed by a casing (31) with an aperture (32), and carries an inclined worm (29) on its lower portion in a plane perpendicular to the axis of the small perforated cylinder (11),

- in that the perforated inner drum (2) is connected at its rear end with respect to the direction of travel of the material, by means of a conical perforated passage (17), to a tube (9) in which there is arranged a screw-shaped strip (12) which has the outlet aperture (14),

- in that concentrically to the tube (9), which is perforated in the region after the small perforated cylinder (11), there is arranged a large perforated cylinder (13) round the tube (9) which is enclosed by a casing (36) which has in its front section an aperture (37) and in the region round the large perforated cylinder a further lower aperture (38), and

- in that spray heads (30 and 35) are associated with the small and the large perforated cylinder (11 and 13).

3. Device according to claim 2, characterised in that the screw-shaped strip (4) of the outer drum (1) is double-threaded with an angular spacing of 180°.

4. Device according to claim 2 or 3, characterised in that at least two spray heads (30) are associated with the small perforated cylinder (11) laterally in the horizontal axial plane of the cylinder (11) and below it with an angular spacing of 30 to 80°.

5. Device according to one of claims 2 to 4, characterised in that at least two spray heads (35) are associated with the large cylinder (13) and are arranged to the side of the cylinder (13) at an angle of 100 to 180° with respect to each other.

6. Device according to one of claims 2 to 5, characterised in that at least one large perforated cylinder (13) and one small perforated cylinder (11) are arranged to follow one after the other.

7. Device according to one of claims 2 to 6, characterised in that the apertures of the dividing wall (7) and of the conical perforated passage (17) are of parallelepipedal construction and are arranged like a chess board.

8. Device according to one of claims 2 to 7, characterised in that the apertures of the perforation of the cylindrical portion (5) of the inner drum (2), of the small perforated cylinder (11), of the large perforated cylinder (13) and of the perforated portion of the tube (9) are round with chessboard-like positioning, the surface of the apertures of two adjacent rows, whose centres form equilateral triangles, being five to six times smaller than the surface of the corresponding triangle.

**Revendications**

1. Procédé pour obtenir des fractions enrichies à partir d'accumulateurs usagés broyés, dans lequel on sépare et on lave le matériau broyé, procédé caractérisé par le fait

- qu'à partir du matériau (44) broyé à une granulométrie allant jusqu'à 300mm, on forme, avec de l'eau (45) et une fraction pâteuse oxyde-sulfate, une suspension lourde d'un poids spécifique de 1,65 à 2,20 kg/dm$^3$ à partir de laquelle on sépare un matériau lourd (46) constitué d'une fraction métallique de granulométrie grossière et d'une fraction oxyde-sulfate, ainsi qu'un matériau léger (49) sous forme d'une fraction organique, constitué d'ébonite, de chlorure de polyvinyle et de polypropylène, souillés par la fraction oxyde-sulfate,

- qu'en même temps que le matériau lourd (46), on évacue aussi une certaine quantité de la suspension, tandis que le reste subsiste pour être séparé,

- qu'ensuite on lave le matériau lourd (46) pour obtenir une fraction métallique pure de granulométrie grossière et une fraction métallique (48) de granulométrie fine, souillée par la fraction oxyde-sulfate, étant précisé que l'on sépare cette dernière fraction et qu'on la trie pour obtenir une fraction métallique pure de granulométrie fine (48) et une fraction oxyde-sulfate (47),

- qu'à partir du matériau léger (49) encore non lavé, on forme, en vue d'une seconde séparation, et on sépare, une suspension constituée d'eau (45) et de la fraction oxyde-sulfate,

d'un poids spécifique de la suspension de 1,25 à 165 kg/dm$^3$, ce par quoi on obtient un second matériau lourd (51), constitué d'une fraction ébonite et un second matériau léger qui est une fraction chlorure de polyvinyle et une fraction polypropylène souillée par des fraction oxyde-sulfate,

- qu' ensuite on lave isolément et on sépare le second matériau lourd obtenu (51) et le second matériau léger obtenu (52), ce qui donne une fraction ébonite pure, une fraction chlorure de polyvinyle et polypropylène, ainsi qu'une fraction oxyde-sulfate,

- que l'on soumet le second matériau léger (52) à une troisième séparation dans l'eau, ce par quoi on obtient un troisième matériau lourd sous forme d'une fraction chlorure de polyvinyle et un troisième matériau léger sous forme d'une fraction polypropylène, et

- qu'enfin on lave les fractions pour obtenir du chlorure de polyvinyle pur et du polypropylène pur.

2.  Installation pour la mise en oeuvre du procédé selon la revendication 1, dans laquelle les dispositifs de séparation-lavage sont disposés les uns derrière les autres, caractérisée par le fait

- que chaque dispositif de séparation-lavage (41, 42, 43) est formé de deux tambours disposés concentriquement, à savoir un tambour extérieur (1) et un tambour intérieur (2), étant précisé que le tambour extérieur (1) est une partie cylindrique (3) avec un ruban (4) en forme d'hélice disposé sur sa paroi intérieure, avec un couvercle (25) rapporté sur sa portion avant, vu dans le sens d'avancement du matériau, et présentant une ouverture d'entrée (26) et avec une partie (8) qui est prévue sur sa portion arrière, vu dans le sens d'avancement du matériau, qui va en diminuant en cône sur la paroi intérieure de laquelle est rapporté un ruban (16) en forme d'hélice, et se termine en un cône (15) qui va en s'élargissant coniquement et présente une ouverture annulaire (10),

- qu'entre la partie cylindrique (3) et la partie (8) qui va en diminuant en cône est prévue une paroi séparatrice perforée (7) qui présente une ouverture intermédiaire (18) et qui se situe dans la zone des rubans (4 ou 16) de la portion arrière du tambour extérieur (1) et de la portion avant de la partie (8) qui va en diminuant en cône, étant précisé que sur la paroi extérieure de la partie cylindrique (3) est rapportée une frette d'appui (23) et que des pales agitatrices (28) sont rapportées sur une portion avant de la paroi intérieure près du couvercle (25),

- que le tambour intérieur perforé (2), fixé concentriquement à l'axe du tambour extérieur (1) au moyen de barrettes (21), présente une partie cylindrique (5) sur la paroi intérieure de laquelle est rapporté un ruban en forme d'hélice (6) et sur la paroi extérieure de laquelle sont rapportées des pales de puisage perforées (20) avec des ouvertures longitudinales (27) dans leur partie cylindrique (5),

- que le tambour intérieur perforé (2) est obturé à l'extrémité avant par un fond (24) et conduit, à son extrémité arrière, à une ouverture de sortie (14),

- qu'au-dessus des ouvertures longitudinales (27) sont rapportés des réflecteurs (22),

- qu'au-dessus de l'ouverture intermédiaire (18) est prévu un écran (19) pour retenir le matériau léger,

- que sur le cône (15) qui va en s'élargissant en cône est fixé un petit cylindre perforé (11) qui est entouré d'une enveloppe (31) avec une ouverture (32) et qui, à sa partie inférieure, porte une vis sans fin inclinée (29) dans un plan perpendiculaire à l'axe du petit cylindre perforé (11),

- que le tambour intérieur perforé (2) est relié, à son extrémité arrière, vu dans le sens d'avancement du matériau, par l'intermédiaire d'un passage perforé en forme de cône (17), avec un tube (9) dans lequel est disposé un ruban en forme hélice (12) qui présente l'ouverture de sortie (14),

- que concentriquement au tube (9), qui est perforé dans la zone située après le petit cylindre perforé (11), autour du tube (9) est disposé un grand cylindre perforé (13) qui est entouré d'une enveloppe (36) qui présente, à sa portion avant, une ouverture (37) et, dans la zone située autour du grand cylindre perforé, une autre ouverture inférieure (38), et

- qu'au petit et au grand cylindres perforés (11 ou 13) correspondent des têtes de pulvérisation (30 ou 35).

3. Installation selon la revendication 2, caractérisée par le fait que le ruban en forme d'hélice (4) du tambour extérieur (1) est à filet double avec une distance angulaire de 180°.

4. Installation selon la revendication 2 ou 3, caractérisée par le fait qu'au petit cylindre perforé (11) correspondent au moins deux têtes de pulvérisation (30), latéralement dans le plan horizontal de l'axe du cylindre (11) et par-dessous, à une distance angulaire de 30 à 80°.

5. Installation selon l'une des revendications 2 à 4, caractérisée par le fait qu'au grand cylindre (13) correspondent au moins deux têtes de pulvérisation (35) qui sont disposées latéralement par rapport au cylindre (16), avec un angle de 100 à 180° l'une de l'autre.

6. Installation selon l'une des revendications 2 à 5, caractérisée par le fait qu'au moins un grand cylindre perforé (13) et un petit cylindre perforé (11) sont disposés successivement.

7. Installation selon l'une des revendications 2 à 6, caractérisée par le fait que les ouvertures de la paroi séparatrice (7) et du passage perforé conique (17) sont en forme de parallélépipède et sont disposées en damier.

8. Installation selon l'une des revendications 2 à 7, caractérisée par le fait que les ouvertures de la perforation de la partie cylindrique (5) du tambour intérieur (2), du petit cylindre perforé (11), du grand cylindre perforé (13) et de la partie perforée du tube (9) sont rondes avec un positionnement en damier, étant précisé que la surface des ouvertures de deux rangées voisines, dont les centres forment des triangles équilatéraux, est de cinq à sept fois plus petite que la surface du triangle correspondant.

Fig .1

A – A

27
28
20
22
4
22

Fig. 2

Fig. 3

EP 0 292 815 B1

Fig. 4

Fig . 5

Fig. 6

Fig. 7